(19) Europäisches Patentamt
European Patent Office
Office européen des brevets

(11) **EP 3 967 586 B1**

(12) **EUROPEAN PATENT SPECIFICATION**

(45) Date of publication and mention
of the grant of the patent:
**04.10.2023 Bulletin 2023/40**

(21) Application number: **20805495.7**

(22) Date of filing: **11.05.2020**

(51) International Patent Classification (IPC):
**B62L 3/08** *(2006.01)* **B60T 7/12** *(2006.01)*
**B60T 8/00** *(2006.01)* **B60T 8/26** *(2006.01)*

(52) Cooperative Patent Classification (CPC):
**B60T 7/22; B60T 8/1706; B60T 8/1766;**
**B60T 8/261; B62L 3/08; B62L 5/20;** B60T 2201/022

(86) International application number:
**PCT/JP2020/018867**

(87) International publication number:
**WO 2020/230765 (19.11.2020 Gazette 2020/47)**

(54) **LEANING VEHICLE EQUIPPED WITH AUTONOMOUS EMERGENCY BRAKING (AEB) CONTROL DEVICE**

MIT AUTONOMER NOTBREMSSTEUERUNGSVORRICHTUNG AUSGESTATTETES NEIGEFAHRZEUG

VÉHICULE À INCLINAISON ÉQUIPÉ D'UN DISPOSITIF DE COMMANDE DE FREINAGE D'URGENCE AUTONOME (AEB)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.05.2019 JP 2019089733**

(43) Date of publication of application:
**16.03.2022 Bulletin 2022/11**

(73) Proprietor: **Yamaha Hatsudoki Kabushiki Kaisha Iwata-shi, Shizuoka 438-8501 (JP)**

(72) Inventors:
• **YASUKAWA, Risa**
  **Iwata-shi, Shizuoka 438-8501 (JP)**
• **KOBAYASHI, Hiroshi**
  **Iwata-shi, Shizuoka 438-8501 (JP)**

• **KISHI, Tomoaki**
  **Iwata-shi, Shizuoka 438-8501 (JP)**
• **TORIGOE, Hoshimi**
  **Iwata-shi, Shizuoka 438-8501 (JP)**

(74) Representative: **Stöckeler, Ferdinand et al Schoppe, Zimmermann, Stöckeler Zinkler, Schenk & Partner mbB Patentanwälte Radlkoferstrasse 2 81373 München (DE)**

(56) References cited:
**EP-A1- 1 568 561         EP-A2- 2 554 444**
**JP-A- 2006 069 303       JP-A- 2018 177 046**
**US-A1- 2017 028 971      US-A1- 2017 028 972**
**US-B1- 6 409 285**

**Description**

[Technical Field]

The present invention relates to a leaning vehicle including an AEB (Autonomous Emergency Braking) control device which is configured to automatically control braking force without requiring an operation of at least one of a front wheel brake operator or a rear wheel brake operator, based on a margin acquired based on the relationship between an obstacle and a host vehicle.

[Background Art]

For example, Patent Literature 1 proposes a leaning vehicle including an AEB control device which is configured to automatically control braking force without requiring an operation of at least one of a front wheel brake operator or a rear wheel brake operator, based on a margin acquired based on the relationship between an obstacle and a host vehicle and corresponds to the obstacle. The leaning vehicle includes the front wheel brake operator and the rear wheel brake operator that are operated by a rider, and leans rightward in the vehicle left-right direction when turning right and leans leftward in the vehicle left-right direction when turning left.

[Citation List]

[Patent Literatures]

[Patent Literature 1] Japanese Unexamined Patent Publication No. 2017-024644

[Summary]

[Technical Problem]

There is a need for a leaning vehicle including an AEB control device which is configured to perform control different from the control recited in Patent Literature 1.
US 2017/028971 A1 discloses an automatic brake device for a saddle riding type vehicle, in which a brake modulator controls actuation of front and rear brakes and includes a collision possibility determining unit, an automatic brake control unit, and a brake operation determining unit. When the collision possibility determining unit determines that there is a possibility of collision, and the brake operation determining unit determines that brake operation by a driver is absent, the automatic brake control unit first actuates only the rear brake to generate a rear wheel braking force, and also actuates the front brake to generate a front wheel braking force.
US 2017/028972 A1 discloses an automatic brake device for a saddle riding type vehicle, in which a brake modulator controls actuation of front and rear brakes, and includes a collision possibility determining unit, an automatic brake control unit, and a brake operation determining unit. When the collision possibility determining unit determines that there is a possibility of collision, and the brake operation determining unit determines that brake operation by a driver is present, the automatic brake control unit changes a manner of increasing braking forces of the front and rear brakes according to the brake operation by the driver.
An object of the present invention is to provide a leaning vehicle which includes a front wheel brake operator and a rear wheel brake operator that are operated by a rider, leans rightward in a vehicle left-right direction when turning right and leans leftward in the vehicle left-right direction when turning left, and includes an AEB control device configured to perform control different from known control schemes.

[Solution to Problem]

The inventors of the present invention diligently studied an assisting braking force automatically generated in a leaning vehicle including an AEB control device which is configured to automatically generate braking force without requiring an operation of at least one of a front wheel brake operator or a rear wheel brake operator, based on a margin acquired based on the relationship between an obstacle and a host vehicle, and found a novel control scheme. According to the novel control scheme, in a leaning vehicle which includes a front wheel brake operator and a rear wheel brake operator that are operated by a rider and leans rightward in a vehicle left-right direction when turning right and leans leftward in the vehicle left-right direction when turning left, braking force which is automatically generated based on a margin acquired based on the relationship between an obstacle and a host vehicle is controlled in consideration of the balance between a front wheel braking force and a rear wheel braking force relative to an ideal braking force distribution when one rider rides. In particular, the leaning vehicle includes the front wheel brake operator and the rear wheel brake operator. On this account, the rider may control the action of the leaning vehicle by adjusting the balance between the front wheel brake operator and the rear wheel brake operator. For example, when the braking force is generated at the front wheel in a state in which braking force is generated at neither the front wheel nor the rear wheel, a suspension of the front wheel contracts whereas a suspension of the rear wheel elongates, with the result that the leaning vehicle exhibits a pitching action. At this stage, loads acting on the front wheel and the rear wheel are varied. It is considered that the rider adjusts the balance between the front wheel brake operator and the rear wheel brake operator in consideration of such an action.
The present invention is based on a technical idea that a braking force which is generated automatically is controlled in consideration of the balance between a front wheel braking force and a rear wheel braking force relative to an ideal braking force distribution when one rider rides. This technical idea is totally different from the technical idea of Patent Literature 1, i.e., an automatically-generated braking force is separated into a front wheel braking force and a rear wheel braking force, and a braking force is controlled with the use of the limits of front wheel braking force and rear wheel braking force, respectively.

A leaning vehicle including an AEB control device of an embodiment of the present invention has the following structures.

A leaning vehicle comprises: a front wheel brake operator and a rear wheel brake operator that are operated by a rider; and an AEB (Autonomous Emergency Braking) control device which is mounted on a leaning vehicle body frame leaning rightward in a vehicle left-right direction when turning right and leaning leftward in the vehicle left-right direction when turning left and is configured to automatically control the front wheel braking force and the rear wheel braking force without requiring an operation of at least one of the front wheel brake operator or the rear wheel brake operator, based on a margin acquired based on the relationship between an obstacle and the leaning vehicle. The AEB control device controls the front wheel braking force and the rear wheel braking force that are automatically generated, so that the state transition of the front wheel braking force and the rear wheel braking force is a state transition 1 described below.

State transition 1: Within a range excluding a range in which the rear wheel braking force is small as compared to an ideal braking force distribution when one rider rides, a state where the front wheel braking force and the rear wheel braking force are both zero transitions to a state of changing along positions where the front wheel braking force and the rear wheel braking force are both not zero.

A leaning vehicle including an AEB control device of an embodiment of the present invention may have the following structure.

The AEB control device controls the front wheel braking force and the rear wheel braking force that are automatically generated, so that the state transition of the front wheel braking force and the rear wheel braking force is a state transition 2 described below.

State transition 2: Within a range excluding a range in which the rear wheel braking force is small as compared to the ideal braking force distribution when one rider rides, a state where the front wheel braking force and the rear wheel braking force are both zero transitions to a state of departing from the ideal braking force distribution when one rider rides and a braking force distribution at which the front wheel braking force is zero.

A leaning vehicle including an AEB control device of an embodiment of the present invention may have the following structure.

The AEB control device controls the front wheel braking force and the rear wheel braking force that are automatically generated, so that the state transition of the front wheel braking force and the rear wheel braking force is a state transition 3 described below.

State transition 3: Within a range excluding a range in which the rear wheel braking force is small as compared to the ideal braking force distribution when one rider rides, a state of departing from the ideal braking force distribution when one rider rides transitions to a state of coming close to the ideal braking force distribution when one rider rides so that the total braking force which is the sum total of the front wheel braking force and the rear wheel braking force increases.

A leaning vehicle including an AEB control device of an embodiment of the present invention may have the following structure. The AEB control device controls the front wheel braking force and the rear wheel braking force that are automatically generated, so that the state transition of the front wheel braking force and the rear wheel braking force is a state transition 4 described below.

State transition 4: Within a range excluding a range in which the rear wheel braking force is small as compared to the ideal braking force distribution when one rider rides, transition to a state of changing along the ideal braking force distribution when one rider rides so that the total braking force which is the sum total of the front wheel braking force and the rear wheel braking force increases occurs.

A leaning vehicle including an AEB control device of an embodiment of the present invention may have the following structure. The AEB control device controls the front wheel braking force and the rear wheel braking force that are automatically generated, so that the state transition of the front wheel braking force and the rear wheel braking force is a state transition 5 described below.

State transition 5: Within a range excluding a range in which the rear wheel braking force is small as compared to the ideal braking force distribution when one rider rides, a state of changing along the ideal braking force distribution when one rider rides so that the total braking force increases transitions to a state of departing from the ideal braking force distribution when one rider rides.

A leaning vehicle including an AEB control device of an embodiment of the present invention may have the following structure.

The AEB control device controls the front wheel braking force and the rear wheel braking force that are automatically generated, so that the state transition of the front wheel braking force and the rear wheel braking force is a state transition 6 described below.

State transition 6: Within a range excluding a range in which the rear wheel braking force is small as compared to the ideal braking force distribution when one rider rides, a state where the total braking force which is the sum total of the front wheel braking force and the rear wheel braking force increases transitions to a state where the total braking force is maintained.

[Advantageous Effects]

With the arrangements above, in a leaning vehicle which includes a front wheel brake operator and a rear wheel brake operator that are operated by a rider and leans rightward in a vehicle left-right direction when turning right and leans leftward in the vehicle left-right direction when turning left, the braking force which is automatically generated based on a margin acquired based on the relationship between an obstacle and a host vehicle can be controlled in consideration of the balance between the front wheel braking force and the rear wheel braking force relative to an ideal braking force distribution when one rider rides.

The present invention is based on a technical idea that the braking force which is generated automatically is controlled in consideration of the balance between the front wheel braking force and the rear wheel braking force relative to an ideal braking force distribution when one rider rides. This technical idea is totally different from the technical idea of Patent Literature 1, i.e., automatically-generated braking force is separated into front wheel braking force and rear wheel braking force, and the braking force is controlled with the use of the limit of each force.

The present invention is therefore able to provide a leaning vehicle which includes a front wheel brake operator and a rear wheel brake operator that are operated by a rider, leans rightward in a vehicle left-right direction when turning right and leans leftward in the vehicle left-right direction when turning left, and includes an AEB control device configured to perform a control different from known control schemes.

[State Transition 8]

The AEB control device may control the front wheel braking force and the rear wheel braking force that are automatically generated, so that the state transition of the front wheel braking force and the rear wheel braking force is a state transition 8 described below.

State transition 8: Within a range excluding a range in which the rear wheel braking force is small as compared to the ideal braking force distribution when one rider rides on the leaning vehicle, transition to a state where the rear wheel braking force is increased and the front wheel braking force is decreased while the total braking force is maintained occurs.

[State Transition 9]

The AEB control device may control the front wheel braking force and the rear wheel braking force that are automatically generated, so that the state transition of the front wheel braking force and the rear wheel braking force is a state transition 9 described below.

State transition 9: Within a range excluding a range in which the rear wheel braking force is small as compared to the ideal braking force distribution when one rider rides on the leaning vehicle, when the vehicle speed decreases either after the total braking force is increased or while the total braking force is being increased, transition to a state where the rear wheel braking force is increased and the front wheel braking force is decreased occurs.

[State Transition 10]

The AEB control device may control the front wheel braking force and the rear wheel braking force that are automatically generated, so that the state transition of the front wheel braking force and the rear wheel braking force is a state transition 10 described below.

State transition 10: Within a range excluding a range in which the rear wheel braking force is small as compared to the ideal braking force distribution when one rider rides on the leaning vehicle, a state where the front wheel braking force and the rear wheel braking force are maintained transitions to a state where the rear wheel braking force increases whereas the front wheel braking force decreases.

[State Transition 11]

The AEB control device may control the front wheel braking force and the rear wheel braking force that are automatically generated, so that the state transition of the front wheel braking force and the rear wheel braking force is a state transition 11 described below.

State transition 11: Within a range excluding a range in which the rear wheel braking force is small as compared to the ideal braking force distribution when one rider rides on the leaning vehicle, transition to a state where the front wheel braking force and the rear wheel braking force are maintained occurs.

[State of Changing Along Positions Where the Front Wheel Braking Force and the Rear Wheel Braking Force Are Both Not Zero]

In the present invention and the embodiments, a state of changing along positions where the front wheel braking force and the rear wheel braking force are both not zero is a state where the front wheel braking force changes within a range excluding zero and the rear wheel braking force changes within a range excluding zero. In other words, the state excludes a state where the rear wheel braking force changes while the front wheel braking force remains at zero and a state where the front wheel braking force changes while the rear wheel braking force remains at zero.

[Ideal Braking Force Distribution of Leaning Vehicle When One Rider Rides]

An ideal braking force distribution when one rider rides on the leaning vehicle in the present invention and the embodiments is an ideal braking force distribution calculated with the assumption that the load on the leaning vehicle is only one rider who has a typical weight. The ideal braking force distribution when one rider rides on the leaning vehicle is calculated by a known method. The weight of the rider is, for example, 50kg. This weight of the rider is a relatively lightweight as compared to an average weight of Japanese people including women. The ideal braking force distribution when one rider rides on the leaning vehicle is a distribution of the front wheel braking force and the rear wheel braking force which is most efficient for generating deceleration (negative acceleration). Only one ideal braking force distribution when one rider rides is set for a single value of total braking force. In other words, only one ideal braking force against a front wheel and only one ideal braking force against a rear wheel are set for a single value of total braking force.

Ideal braking force $B_f$[N] against the front wheel and ideal braking force $B_r$[N] against the rear wheel are calculated by the following mathematical expression, in accordance with a road surface $\mu$ (coefficient of friction on a road). In the expression, $\alpha_m$ indicates a deceleration coefficient, W[N] indicates vehicle weight, $W_{f0}$[N] indicates a front wheel shared load at vehicle stop, $W_{r0}$[N] indicates a rear wheel shared load at vehicle stop, H[m] indicates ground height of the gravity center, and L[m] indicates the wheelbase. The ideal braking force distribution when one rider rides is therefore calculated from vehicle dimensions. Examples of the dimensions include the vehicle weight, the distance in the vehicle front-rear direction between the gravity center and the grounding point of a front wheel, the distance in the vehicle front-rear direction between the gravity center and the grounding point of a rear wheel, and the ground height of the gravity center.

[Expression 1]

$$B_f = \alpha_m \times \left( W_{f0} + \frac{\alpha_m \times H \times W}{L} \right)$$

$$B_r = \alpha_m \times \left( W_{r0} - \frac{\alpha_m \times H \times W}{L} \right)$$

When two occupants including a rider ride on a leaning vehicle, a brake assist control device of the present invention may control the braking force by utilizing the ideal braking force distribution when one rider rides according to the present invention or an ideal braking force distribution when two occupants ride. Hereinafter, the ideal braking force distribution when one rider rides will be simply referred to as the ideal braking force distribution.

[Definition of State of Coming Close to Ideal Braking Force Distribution When One Rider Rides]

A state of coming close to the ideal braking force distribution when one rider rides in the present invention and the embodiments includes a state of coming close to a position on the ideal braking force distribution when one rider rides from a position not on the ideal braking force distribution when one rider rides. In this case, the AEB control device controls at least one of the front wheel braking force or the rear wheel braking force so that the front wheel braking force and the rear wheel braking force come close to the ideal braking force distribution when one rider rides. The state of coming close to the ideal braking force distribution when one rider rides includes a state where the above-described control of causing the front wheel braking force and the rear wheel braking force to come close to the ideal braking force distribution has been done. For example, the state of coming close to the ideal braking force distribution when one rider rides is a state of coming close to a position on the ideal braking force distribution when one rider rides from a position not on the ideal braking force distribution when one rider rides and reaching a position immediately before the ideal braking force distribution when one rider rides. For example, the state of coming close to the ideal braking force distribution when one rider rides is a state of coming close to a position on the ideal braking force distribution when one rider rides from a position not on the ideal braking force distribution when one rider rides, going across the ideal braking force distribution when one rider rides, and reaching a position not on the ideal braking force distribution when one rider rides. A state of coming close to the ideal braking force distribution when two occupants ride is identical with the state of coming close to the ideal braking force distribution when one rider rides, except that one rider is replaced with two occupants.

[State of Changing Along Ideal Braking Force Distribution When One Rider Rides]

A state of changing along the ideal braking force distribution when one rider rides in the present invention and the embodiments encompasses a state where the front wheel braking force and the rear wheel braking force change on the ideal braking force distribution when one rider rides and a state where the front wheel braking force and/or the rear wheel braking force change while keeping a distance from the ideal braking force distribution when one rider rides. This distance may not be constant. The ideal braking force distribution when one rider rides expressed by a curved line. However, the state of changing along the ideal braking force distribution when one rider rides may be a state of changing linearly along the ideal braking force distribution when one rider rides. A state changing along the ideal braking force distribution when two occupants ride is identical with the state changing along the ideal braking force distribution when one rider rides, except that one rider is replaced with two occupants.

[State of Departing from Ideal Braking Force Distribution When One Rider Rides]

A state of departing from the ideal braking force distribution when one rider rides in the present invention and the embodiments is a state where the front wheel braking force and/or the rear wheel braking force changes from a position where the shortest distance from the ideal braking force distribution when one rider rides is short to a position where the shortest distance from the ideal braking force distribution when one rider rides is long. A state of departing from the ideal braking force distribution when two occupants ride is identical to the state of departing from the ideal braking force distribution when one rider rides, except that one rider is replaced with two occupants.

[Transition to State of Changing Along Ideal Braking Force Distribution When One Rider Rides]

In the present invention and the embodiments, a transition to a state of changing along ideal braking force distribution when one rider rides may indicate a transition from a state where the front wheel braking force and the rear wheel braking force are both zero to a state of changing along an ideal braking force distribution when one rider rides, without the intermediary of another state, or may indicate a transition from a state where the front wheel braking force and the rear wheel braking force are both zero to a state of changing along an ideal braking force distribution when one rider rides, via a state of not changing along the ideal braking force distribution when one rider rides.

[Leaning Vehicle]

A leaning vehicle of the present invention and embodiments is a vehicle which includes a leaning vehicle body frame structured to lean rightward in the vehicle left-right direction when turning right and lean leftward in the vehicle left-right direction when turning left. The vehicle includes at least one front wheel and at least one rear wheel. The leaning vehicle may include two front wheels and one or two rear wheels. The leaning vehicle may include one front wheel and one or two rear wheels. In the leaning vehicle, either the front wheel or the rear wheel may be steered. The leaning vehicle includes a driving source. The driving source may be an engine, a motor driven by electricity, or a hybrid driving source including both an engine and a motor. The leaning vehicle body frame is a member which mainly receives stress in the leaning vehicle. The leaning vehicle body frame may be a frame formed by combining a plurality of components, or may be an integrally-molded frame.

[Brake Operation and Brake Operation Amount]

The leaning vehicle includes a front wheel brake, a rear wheel brake, and at least one brake operator. The front wheel brake is configured to apply the front wheel braking force to the front wheel. The rear wheel brake is configured to apply the rear wheel braking force to the rear wheel. The front wheel brake, the rear wheel brake, or a combination of the front wheel brake and the rear wheel brake may be simply referred to as a brake. The brake operator may be a lever operated by a hand of the rider or a pedal operated by a foot of the rider. The leaning vehicle may include a front wheel brake operator and a rear wheel brake operator as the brake operator. The front wheel brake operator may be arranged to be able to operate not only the front wheel brake but also the rear wheel brake. The rear wheel brake operator may be arranged to be able to operate not only the rear wheel brake but also the front wheel brake. The front wheel brake and the rear wheel brake may be operated by a single brake operator. A brake operation in the present invention and the embodiments indicates an action to operate a brake operator provided in the leaning vehicle. A brake operation amount indicates to what extent the rider performs the brake operation. The brake operation amount may be information directly indicating the brake operation amount, or information indirectly indicating the brake operation amount, e.g., information correlated to the brake operation amount. Acquisition of a brake operation amount indicates that information indicating a brake operation amount is directly acquired or information indicating a brake operation amount is indirectly acquired.

[AEB Control Device]

An AEB control device of the present invention and the embodiments is a controller having a function of controlling an automatically-generated braking force. The AEB control device may have other functions. For example, when an ABS control device having a function of antilock braking system (ABS) has a function of controlling an automatically-generated braking force, the ABS control device is regarded as an AEB control device. The AEB control device of the present invention and the embodiments is electrically connected to a brake and a margin related sensor which is required to determine a margin acquired based on the relationship between an obstacle and a host vehicle. The AEB control device of the present invention and the embodiments may be electrically connected to a leaning angle related sensor which is required to acquire at least one of leaning angular speed or leaning angular acceleration. Examples of the leaning angle related sensor include an IMU (Inertial Measurement Unit), a GPS (Global Positioning System), and a camera for obtaining a leaning angle from an image. The margin related sensor is, for example, a camera taking images ahead of the leaning vehicle, a millimeter wave radar, a LIDAR, or a combination of these devices. Each sensor may be of any type as long as the functions described above are achieved. The brake has a function of generating the braking force upon receiving an electrical signal from the AEB control device. The brake may be of any type as long as the function described above is achieved. The AEB control device may be electrically connected to a sensor different from the sensors above. The AEB control device may be controlled based on a signal acquired by a sensor different from the sensors above. The AEB control device may have a function of the antilock braking system (ABS). In this case, the AEB control device may be electrically connected to a sensor capable of detecting a slipping state of a wheel. The AEB control device may control an electrically-connected brake which is a brake not mechanically but electrically connected to a brake operator. The AEB control device may control a brake that involves both mechanical connection and electrical connection.

[Margin Acquired Based on Relationship between Obstacle and Host Vehicle]

In the present invention and the embodiments, a margin acquired based on the relationship between an obstacle and a host vehicle is a margin when a rider deals with an obstacle. The margin is acquired based on the relative speed between an obstacle and a host vehicle, for example. The margin is information such as a numerical value and the magnitude of an analog signal. When the margin is higher than a reference value, there is a margin in comparison with the reference value. The reference value may be set in advance in accordance with each type of the leaning vehicles. The margin may be corrected or learned based on signals obtained by various types of sensors. The margin may be information directly indicating the margin or information indirectly indicating the margin such as information correlated with the margin. Acquisition of a margin indicates acquisition of information directly indicating the margin or acquisition of information indirectly indicating the margin.

[Leaning Angle]

A leaning angle in the present invention and the embodiments is a tilt angle in the left-right direction of the leaning vehicle relative to the vertical direction. The tilt angle in the left-right direction of the leaning vehicle relative to the vertical direction indicates the tilt angle in the left-right direction of the leaning vehicle body frame of the leaning vehicle relative to the vertical direction. When the leaning angle is zero, the leaning vehicle is in an upright state in the left-right direction of the leaning vehicle. A state in which the absolute value of the leaning angle decreases is a state in which the leaning vehicle shifts from a state of leaning in the left-right direction of the leaning vehicle to the upright state. A state in which the absolute value of the leaning angle increases is a state in which the leaning vehicle shifts from the upright state to the state of leaning in the left-right direction of the leaning vehicle. The time change rate of the leaning angle during this shift is equivalent to the leaning angular speed. The time change rate of the leaning angular speed is equivalent to the leaning angular acceleration. The leaning angular speed or the leaning angular acceleration may be information directly indicating the leaning angular speed or the leaning angular acceleration, or may be information indirectly indicating the leaning angular speed or the leaning angular acceleration, such as information correlated to the leaning angular speed or the leaning angular acceleration. Acquisition of the leaning angular speed or the leaning angular acceleration indicates acquisition of information directly indicating the leaning angular speed or the leaning angular acceleration or acquisition of information indirectly indicating the leaning angular speed or the leaning angular acceleration. Examples of the leaning angle related sensor include an IMU (Inertial Measurement Unit), a GPS (Global Positioning System), and a camera for obtaining a leaning angle from an image.

[Technical Differences from Other Driving Assist Control Devices and Combinations Thereof]

The AEB control device of the present invention and the embodiments is a driving assist control device of one type. In addition to this, as a driving assist control device, a brake assist control device has been proposed. These two devices are technologically different in the following points. The brake assist control device is a technology of controlling the assisting braking force based on an operation of the brake operator by the rider. Meanwhile, the AEB control device is a technology of automatically controlling the braking force even if the brake operator is not operated. These two control devices are significantly different technologies from the viewpoint of the brake operation by the rider. In addition to the above, the brake assist control device is a technology designed for scenes in which the brake operator is operated by the rider. The AEB control device is a technology designed for scenes in which the brake operator is not operated. These two control devices are significantly different technologies from the viewpoint of the brake operation by the rider. The AEB control device may be combined with the brake assist control device even though they are different technologies. For example, when a brake assist control device having a brake assist control function has a function of controlling AEB, the brake assist controller is regarded as an AEB control device.

[Specific Means]

The hardware structures of the AEB control device of the present invention and the embodiments and of the leaning vehicle including this control device are not detailed in this description. Because the features of the present invention and the embodiments are technologies related to control, a person with ordinary skill in the art would understand that the leaning vehicle including the AEB control device recited in the present invention and the embodiments can be embodied by the hardware structures of a AEB control device recited in Patent Literature 1 or another known document and the hardware structures of a leaning vehicle including this control device. The figure of relationship of control schemes indicates each brake operation amount and each braking force. A person with ordinary skill in the art would understand what is meant by each figure, and would be able to embody the invention by means of a known hardware structure.

[To Control the Braking Force]

In the present invention and the embodiments, to control the braking force indicates to control the brake in order to acquire the braking force. For example, when a brake whose braking force varies in accordance with a hydraulic pressure is employed, to control the braking force indicates to control the hydraulic pressure. For example, when a drum brake whose braking force varies in accordance with the rotational angle of a lever is employed, to control the braking force indicates to control the rotational angle of the lever. A specific target of control is changed in accordance with the type of the brake.

[To Increase / Decrease / Maintain Braking Force]

In the present invention and the embodiments, to increase / decrease / maintain total braking force is not limited to a case where actual total braking force is increased / decreased / maintained. To increase / decrease / maintain total braking force encompasses a case where control of increasing / decreasing / maintaining total braking force is considered to be performed even if actual total braking force is not increased / decreased / maintained. To increase / decrease / maintain the front wheel braking force and to increase / decrease / maintain the rear wheel braking force are similarly defined in the present invention and the embodiments.

[Control Based on A]

In the present invention and the embodiments, a control based on A does not indicate that information used for the control is limited to A. The control based on A indicates that information based on which the control is performed includes information which is not A, and encompasses a case where the control is performed based on A and information which is not A.

Unless otherwise defined, all terms (technical and scientific terms) used in this specification and claims indicate meanings typically understood by a person with ordinary skill in the art in the technical field to which the present invention belongs. Terms such as those defined in commonly used dictionaries are to be interpreted as having meaning that is consistent with their meaning in the context of the relevant art and the present application, and are not to be interpreted in an idealized or excessively formal sense.

In the present invention and the embodiments, the term "preferable" is non-exclusive. The term "preferable" means "preferable but not limited to". In this specification, an arrangement which is "preferable" exerts at least the above-described effects of the arrangement of claim 1. In this specification, the term "may" is non-exclusive. The term "may" indicate "may but not must". In this specification, an arrangement which is explained by using the term "may" exerts at least the above-described effects of the arrangement of claim 1.

Brief Description of Drawings

FIG. 1 outlines a leaning vehicle of the First Embodiment of the present invention.
FIG. 2 outlines a leaning vehicle of the Second Embodiment of the present invention.
FIG. 3 outlines a leaning vehicle of the Third Embodiment of the present invention.
FIG. 4 outlines a leaning vehicle of the Fourth Embodiment of the present invention.
FIG. 5 outlines a leaning vehicle of the Fifth Embodiment of the present invention.
FIG. 6 outlines a leaning vehicle of the Sixth Embodiment of the present invention.
FIG. 7 outlines a leaning vehicle of the Seventh Embodiment of the present invention.
FIG. 8 outlines a leaning vehicle of the Eighth Embodiment of the present invention.

[Description of Embodiments]

[Definition of Directions]

In the drawings, U indicates a direction upward from a leaning vehicle, D indicates a direction downward from the leaning vehicle, L indicates a direction leftward from the leaning vehicle, R indicates a direction rightward from the leaning vehicle, F indicates a direction forward from the leaning vehicle, and Re indicates a direction rearward from the leaning vehicle.

[Definitions of Arrows in Figures]

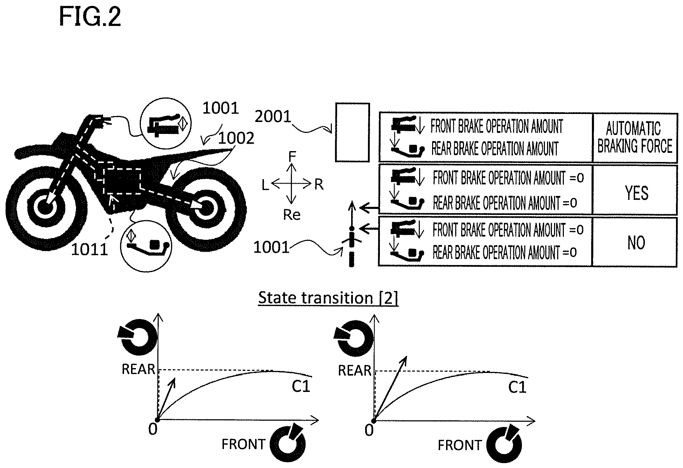

In the figures, a position where both the front wheel braking force and the rear wheel braking force are zero is indicated by a black circle. In the figures, an arrow starting from each black circle falls within a range in which the rear wheel braking force is larger than an ideal braking force distribution when one rider rides on a leaning vehicle 1001, except the starting point of the arrow. In the figures, a line segment of an arrow starting from each black circle, which excludes the starting point of the arrow, indicates at least a part of a state of changing along positions where the front wheel braking force and the rear wheel braking force are both not zero. A line segment of an arrow starting from each black circle, which excludes the starting point of the arrow, indicates either a state of changing along the ideal braking force distribution when one rider rides or a state of departing from the ideal braking force distribution when one rider rides. In the figures, an arrow connected to an arrow starting from a black circle as a starting point indicates a subsequent state. The subsequent state may be a state of coming close to the ideal braking force distribution when one rider rides, for example. An arrow indicating a state of changing along positions where the front wheel braking force and the rear wheel braking force are both not zero, a state of changing along the ideal braking force distribution when one rider rides, a state of departing from the ideal braking force distribution when one rider rides, or a state of coming close to the ideal braking force distribution when one rider rides may be a linear line, a curved line, a combination of a linear line and a curved line, or a combination of linear lines. In the figures, automatic braking force is a collective term of the front wheel braking force and the rear wheel braking force that are automatically controlled by an AEB control device 1011. In FIG. 2 to FIG. 7, the maximum value of rear wheel braking force in the ideal braking force distribution when one rider rides is indicated by a dotted linear line.

[First Embodiment]

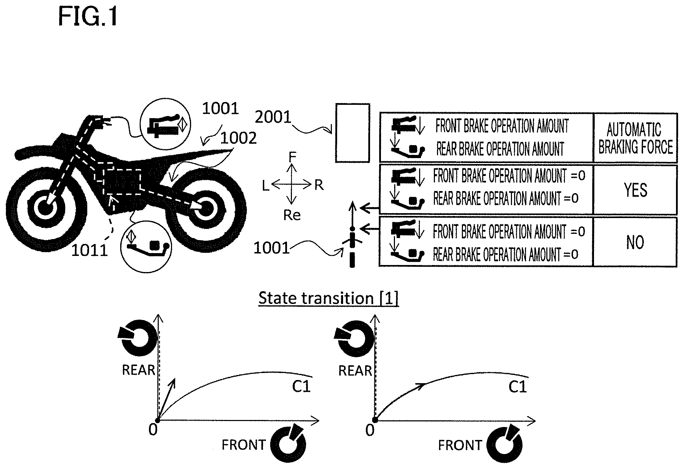

The following will describe a leaning vehicle 1001 of the First Embodiment of the present invention with reference to FIG. 1. The leaning vehicle 1001 includes a front wheel brake operator and a rear wheel brake operator that are operated by a rider. A leaning vehicle 1001 includes an AEB control device 1011 mounted on a leaning vehicle body frame 1002 which leans rightward in the vehicle left-right direction when turning right and leans leftward in the vehicle left-right direction when turning left. The AEB control device 1011 is configured to automatically control the front wheel braking force and the rear wheel braking force without requiring an operation of at least one of the front wheel brake operator or the rear wheel brake operator, based on a margin acquired based on the relationship between an obstacle 2001 and a host vehicle 1001. The AEB control device 1011 controls the front wheel braking force and the rear wheel braking force that are automatically generated, so that the state transition of the front wheel braking force and the rear wheel braking force is the state transition 1 described below.

State transition 1: Within a range excluding a range in which the rear wheel braking force is small as compared to an ideal braking force distribution C1 when one rider rides, a state where the front wheel braking force and the rear wheel braking force are both zero transitions to a state of changing along positions where the front wheel braking force and the rear wheel braking force are both not zero.

For example, as shown in the left drawing included in FIG. 1 and showing the state transition 1, within a range where the above-described range overlaps a range between the ideal braking force distribution C1 when one rider rides and the braking force distribution at which the front wheel braking force is zero, the front braking force and the rear braking force may change along positions where the front wheel braking force and the rear wheel braking force are both not zero. For example, as shown in the right drawing included in FIG. 1 and showing the state transition 1, within the above-described range, the distribution of the braking forces may change along positions on the ideal braking force distribution C1 when one rider rides, where the front wheel braking force and the rear wheel braking force are both not zero.

At the position where the front wheel braking force and the rear wheel braking force are both zero, a rear wheel brake operation amount and a front wheel brake operation amount are both zero. In other words, at the position where the front wheel braking force and the rear wheel braking force are both zero, the rear wheel brake operator and the front wheel brake operator are both not operated.

[Second Embodiment]

The following will describe a leaning vehicle 1001 of the Second Embodiment of the present invention with reference to FIG. 2. An AEB control device 1011 of the Second Embodiment includes the following arrangements, in addition to those of the First Embodiment. The AEB control device 1011 controls the front wheel braking force and the rear wheel braking force that are automatically generated, so that the state transition of the front wheel braking force and the rear wheel braking force is the state transition 2 described below.

State transition 2: Within a range excluding a range in which the rear wheel braking force is small as compared to the ideal braking force distribution C1 when one rider rides, a state where the front wheel braking force and the rear wheel braking force are both zero transitions to a state of departing from the ideal braking force distribution C1 when one rider rides and the braking force distribution at which the front wheel braking force is zero.

For example, as shown in the two drawings included in FIG. 2 and showing the state transition 2, within a range where the above-described range overlaps a range between the ideal braking force distribution C1 when one rider rides and the braking force distribution at which the front wheel braking force is zero, the front wheel braking force and the rear wheel braking force may change along positions where the front wheel braking force and the rear wheel braking force are both not zero. For example, as shown in the left drawing included in FIG. 2 and showing the state transition 2, within a range where the above-described range overlaps a range excluding a range larger than the maximum value of the rear wheel braking force of the ideal braking force distribution C1 when one rider ride, the front wheel braking force and the rear wheel braking force may depart from the ideal braking force distribution C1 when one rider rides and the braking force distribution at which the front wheel braking force is zero. For example, as shown in the right drawing included in FIG. 2 and showing the state transition 2, after changing so as to depart from the ideal braking force distribution C1 when one rider rides and the braking force distribution at which the front wheel braking force is zero, within a range where the above-described range overlaps a range excluding a range larger than the maximum value of the rear wheel braking force of the ideal braking force distribution C1 when one rider ride, the front wheel braking force and the rear wheel braking force, and the change may continue within a range larger than the maximum value of the rear wheel braking force of the ideal braking force distribution C1 when one rider rides. The state transition 2 excludes, for example, a state transition of changing along positions on the ideal braking force distribution C1 when one rider rides, where the front wheel braking force and the rear wheel braking force are both not zero, which is indicated in the right drawing included in FIG. 1 and showing the state transition 1.

[Third Embodiment]

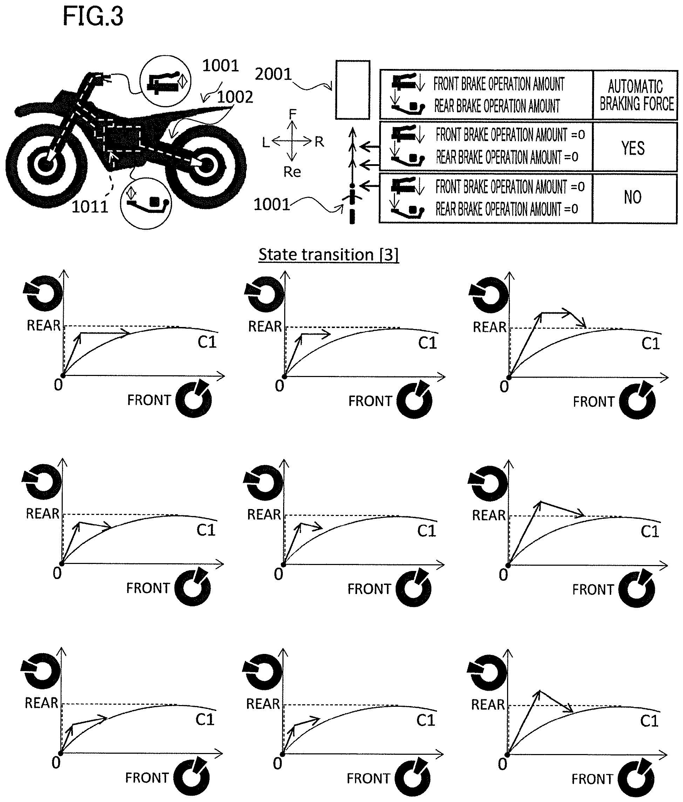

The following will describe a leaning vehicle 1001 of the Third Embodiment of the present invention with reference to FIG. 3. An AEB control device 1011 of the Third Embodiment includes the following arrangements, in addition to those of the First Embodiment and Second Embodiment. The AEB control device 1011 controls the front wheel braking force and the rear wheel braking force that are automatically generated, so that the state transition of the front wheel braking force and the rear wheel braking force is the state transition 3 described below.

State transition 3: Within a range excluding a range in which the rear wheel braking force is small as compared to the ideal braking force distribution C1 when one rider rides, a state of departing from the ideal braking force distribution C1 when one rider rides transitions to a state of coming close to the ideal braking force distribution C1 when one rider rides so that the total braking force which is the sum total of the front wheel braking force and the rear wheel braking force increases.

For example, as shown in FIG. 3, the state where the front wheel braking force and the rear wheel braking force depart from the ideal braking force distribution C1 when one rider rides within the above-described range may be a state transitioned from a state where the front wheel braking force and the rear wheel braking force are both zero. In the state of coming close to the ideal braking force distribution C1 when one rider rides by increasing the total braking force within the above-described range, for example, as shown in FIG. 3, the rear wheel braking force may be maintained whereas the front wheel braking force may be increased. Alternatively, for example, as shown in FIG. 3, the rear wheel braking force may be decreased whereas the front wheel braking force may be increased. Alternatively, for example, as shown in FIG. 3, the rear wheel braking force may be increased and the front wheel braking force may be increased. Alternatively, for example, as shown in FIG. 3, after the rear wheel braking force is maintained whereas the front wheel braking force is increased, the rear wheel braking force may be decreased whereas the front wheel braking force may be increased.

[Fourth Embodiment]

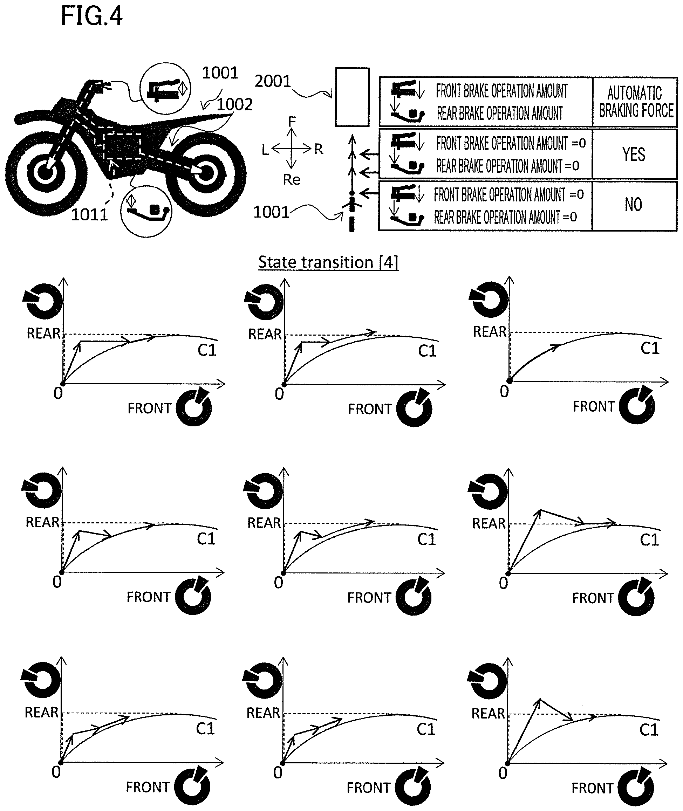

The following will describe a leaning vehicle 1001 of the Fourth Embodiment of the present invention with reference to FIG. 4. An AEB control device 1011 of the Fourth Embodiment includes the following arrangements, in addition to those of the First Embodiment, Second Embodiment, or Third Embodiment. The AEB control device 1011 controls the front wheel braking force and the rear wheel braking force that are automatically generated, so that the state transition of the front wheel braking force and the rear wheel braking force is the state transition 4 described below. State transition 4: Within a range excluding a range in which the rear wheel braking force is small as compared to the ideal braking force distribution C1 when one rider rides, transition to a state of changing along the ideal braking force distribution C1 when one rider rides so that the total braking force which is the sum total of the front wheel braking force and the rear wheel braking force increases occurs.

For example, the state of changing along the ideal braking force distribution C1 when one rider rides so that the total braking force increases, within the above-described range, may be a state transitioned from a state of coming close to the ideal braking force distribution C1 when one rider rides. For example, as shown in FIG. 4, the state transition 4 may occur after the above-described state transition 3.

For example, as shown in FIG. 4, the state of changing along the ideal braking force distribution C1 when one rider rides so that the total braking force increases, within the above-described range, may be a state transitioned from a state where the front wheel braking force and the rear wheel braking force are both zero.

For example, the state of changing along the ideal braking force distribution C1 when one rider rides so that the total braking force increases may fall within a range where the above-described range overlaps a range excluding a range larger than the maximum value of the rear wheel braking force of the ideal braking force distribution C1 when one rider rides. For example, after changing along the ideal braking force distribution C1 when one rider rides so that the total braking force increases, within a range where the above-described range overlaps a range excluding a range larger than the maximum value of the rear wheel braking force of the ideal braking force distribution C1 when one rider rides, the change may continue within a range larger than the maximum value of the rear wheel braking force of the ideal braking force distribution C1 when one rider rides.

Before the state of changing along the ideal braking force distribution C1 when one rider rides so that the total braking force increases, a state of changing within a range where the above-described range overlaps the range larger than the maximum value of the rear wheel braking force of the ideal braking force distribution C1 when one rider rides may or may not exist.

[Fifth Embodiment]

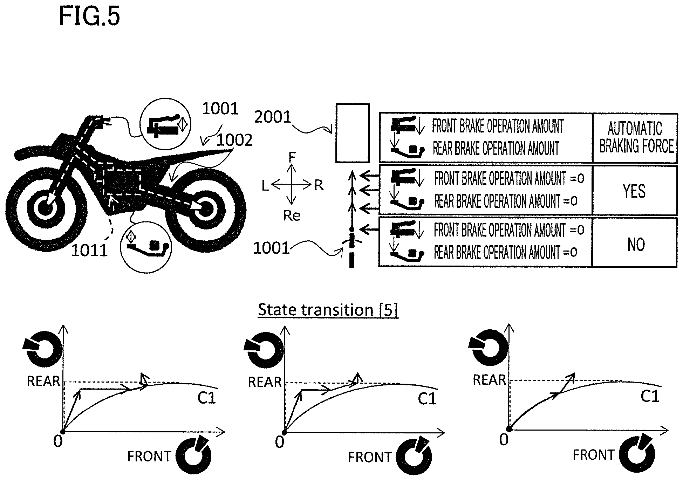

The following will describe a leaning vehicle 1001 of the Fifth Embodiment of the present invention with reference to FIG. 5. An AEB control device 1011 of the Fifth Embodiment includes the following arrangements, in addition to those of the Fourth Embodiment. The AEB control device 1011 controls the front wheel braking force and the rear wheel braking force that are automatically generated, so that the state transition of the front wheel braking force and the rear wheel braking force is the state transition 5 described below.

State transition 5: Within a range excluding a range in which the rear wheel braking force is small as compared to the ideal braking force distribution C1 when one rider rides, a state of changing along the ideal braking force distribution C1 when one rider rides so that the total braking force increases transitions to a state of departing from the ideal braking force distribution C1 when one rider rides.

The state transition 5 occurs after the state transition 4. FIG. 5 shows a part of the state transition 4 shown in FIG. 4. In the state where the front wheel braking force and the rear wheel braking force depart from the ideal braking force distribution C1 when one rider rides within the above-described range, for example, as shown in FIG. 5, the rear wheel braking force may be maintained whereas the front wheel braking force may be increased. Alternatively, for example, as shown in FIG. 5, the front wheel braking force may be decreased whereas the rear wheel braking force may be increased. Alternatively, for example, as shown in FIG. 5, the front wheel braking force may be increased and the rear wheel braking force may be increased.

[Sixth Embodiment]

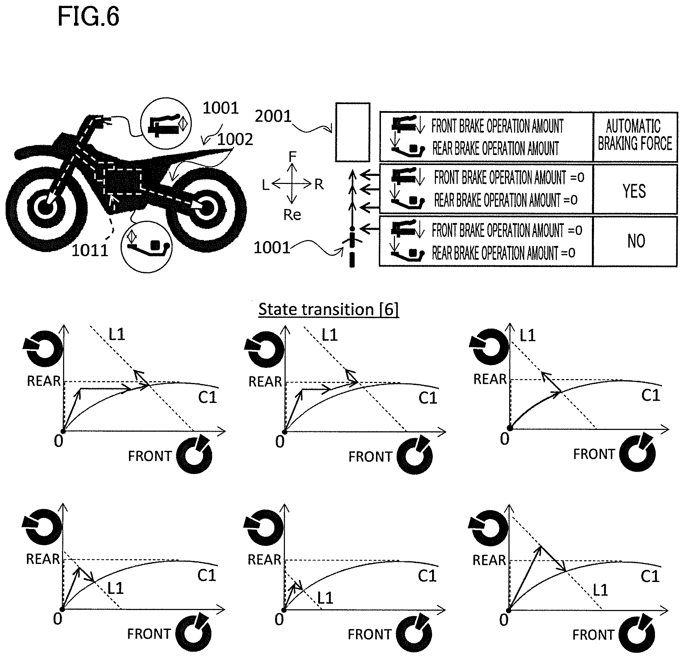

The following will describe a leaning vehicle 1001 of the Sixth Embodiment of the present invention with reference to FIG. 6. An AEB control device 1011 of the Sixth Embodiment includes the following arrangements, in addition to those of the First Embodiment, Second Embodiment, Third Embodiment, Fourth Embodiment, or Fifth Embodiment. The AEB control device 1011 controls the front wheel braking force and the rear wheel braking force that are automatically generated, so that the state transition of the front wheel braking force and the rear wheel braking force is the state transition 6 described below.

State transition 6: Within a range excluding a range in which the rear wheel braking force is small as compared to the ideal braking force distribution C1 when one rider rides, a state where the total braking force which is the sum total of the front wheel braking force and the rear wheel braking force increases transitions to a state where the total braking force is maintained.

The state where the total braking force of the front wheel braking force and the rear wheel braking force increases within the above-described range may be a state transitioned from a state where the front wheel braking force and the rear wheel braking force are both zero or may be a state transitioned from a state where the front wheel braking force and the rear wheel braking force are both zero, via another state.

The state where the total braking force of the front wheel braking force and the rear wheel braking force increases within the above-described range may be a state of departing from the ideal braking force distribution C1 when one rider rides, a state of departing from the ideal braking force distribution C1 when one rider rides and a braking force distribution at which the front wheel braking force is zero, a state of coming close to the ideal braking force distribution C1 when one rider rides so that the total braking force increases, or a state of changing along the ideal braking force distribution C1 when one rider rides so that the total braking force increases.

In the figure, L1 indicates a braking force distribution with which the total braking force is maintained. In the state where the total braking force is maintained, for example, the front wheel braking force may be decreased whereas the rear wheel braking force may be increased. Alternatively, for example, the front wheel braking force may be increased whereas the rear wheel braking force may be decreased. Alternatively, for example, the front wheel braking force and the rear wheel braking force may be maintained.

[Seventh Embodiment]

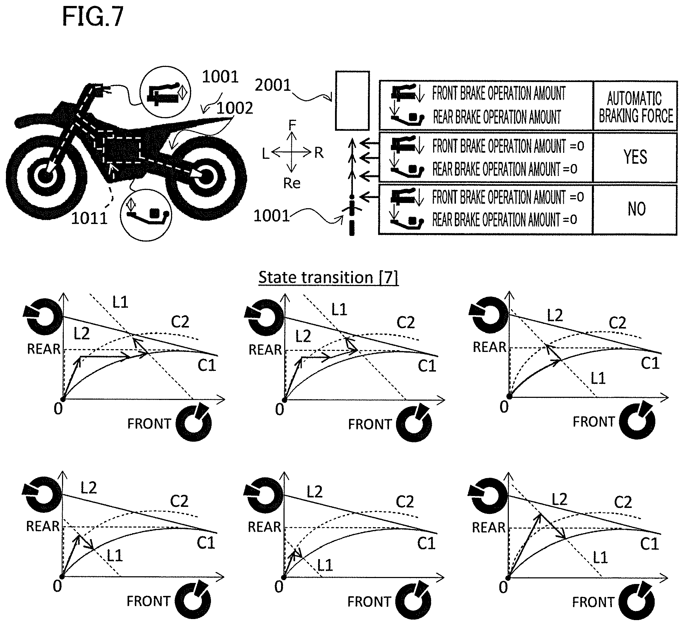

The following will describe a leaning vehicle 1001 of the Seventh Embodiment of the present invention with reference to FIG. 7. An AEB control device 1011 of the Seventh Embodiment includes the following arrangements, in addition to those of the First Embodiment, Second Embodiment, Third Embodiment, Fourth Embodiment, Fifth Embodiment or Sixth Embodiment. In FIG. 7, C2 indicates an ideal braking force distribution when two occupants ride, L1 indicates the braking force distribution with which the total braking force is maintained, and L2 indicates a rear wheel braking force limit that is the limit of the rear wheel braking force. The AEB control device 1011 may control the braking force by utilizing the ideal braking force distribution C2 when two occupants ride. The AEB control device 1011 may perform control utilizing the braking force distribution L1 with which the total braking force is maintained, in addition to the control of the braking force utilizing the ideal braking force distribution C2 when two occupants ride. For example, the AEB control device 1011 may perform the transition to a state of changing along the ideal braking force distribution C2 when two occupants ride. For example, the AEB control device 1011 may perform the transition to a state where the front wheel braking force and the rear wheel braking force are changed toward the ideal braking force distribution C2 when two occupants ride. For example, the AEB control device 1011 may perform the transition to a state of coming close to the ideal braking force distribution C1 when one rider rides from a state in where the front wheel braking force and the rear wheel braking force are on the ideal braking force distribution C2 when two occupants ride. In this case, for example, the transition may be performed so that the total braking force is maintained. For example, the AEB control device 1011 may perform the transition to a state of coming close to the ideal braking force distribution C2 when two occupants ride from a state where the front wheel braking force and the rear wheel braking force are on the ideal braking force distribution C1 when one rider rides. In this case, the transition may be performed so that the total braking force is maintained.

[Supplementary Explanation]

It is easily understood that a range excluding a range in which the rear wheel braking force is small as compared to the ideal braking force distribution when one rider rides in the present invention and the embodiments does not encompass a case where the rear wheel braking force is infinite. This is because it is impossible to generate braking force exceeding the rear wheel braking force limit. For a person with ordinary skill in the art, it is obvious that a range excluding a range in which the rear wheel braking force is small as compared to the ideal braking force distribution when one rider rides encompasses a condition that the range is equal to or smaller than the rear wheel braking force limit. For example, a range excluding a range in which the rear wheel braking force is small as compared to the ideal braking force distribution when one rider rides can be rephrased to a range which excludes a range in which the rear wheel braking force is smaller than the ideal braking force distribution when one rider rides and is equal to or lower than the rear wheel braking force limit.

[Eighth Embodiment]

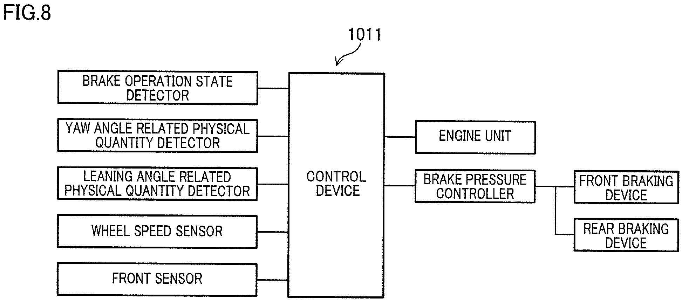

The following will describe a leaning vehicle 1001 of the Eighth Embodiment of the present invention with reference to FIG. 8. The AEB control device 1011 of the First Embodiment, Second Embodiment, Third Embodiment, Fourth Embodiment, Fifth Embodiment, Sixth Embodiment, or Seventh Embodiment may be arranged as described below. The AEB control device 1011 shown in FIG. 7 has a brake assist control function. The AEB control device 1011 is electrically connected to a front braking device, a rear braking device, a front detection device which is required to determine a margin which is acquired based on the relationship between an obstacle 2001 and a host vehicle 1001, and a brake operation state detector which is required to acquire an operation amount of a brake operator. Furthermore, the AEB control device 1011 is electrically connected to an engine unit. The AEB control device 1011 may or may not be electrically connected to a leaning angle related physical quantity detector required to acquire at least one of leaning angular speed or leaning angular acceleration. The AEB control device 1011 may or may not be electrically connected to a yaw angle related physical quantity detector required to acquire at least one of yaw angular speed or yaw angular acceleration.

The front braking device is an example of the front wheel brake or an example of the brake. The rear braking device is an example of the rear wheel brake or an example of the brake. The leaning angle related physical quantity detector is an example of the leaning angle related sensor. The front sensor is an example of the margin related sensor.

[Reference Signs List]

    1001 leaning vehicle (host vehicle)
    1002 leaning vehicle body frame
    2001 obstacle
    1011 AEB (Autonomous Emergency Braking) control device

**Claims**

1.    A leaning vehicle (1001) comprising: a front wheel brake operator and a rear wheel brake operator that are operated by a rider; and an AEB (Autonomous Emergency Braking) control device (1011) which is mounted on a leaning vehicle body frame (1002) leaning rightward in a vehicle left-right direction when turning right and leaning leftward in the vehicle left-right direction when turning left and is configured to automatically control a front wheel braking force and a rear wheel braking force without requiring an operation of at least one of the front wheel brake operator or the rear wheel brake operator, based on a margin acquired based on the relationship between an obstacle (2001) and the leaning vehicle (1001), **characterised in that** the AEB control device (1011) is configured to control the front wheel braking force and the rear wheel braking force that are automatically generated, so that a state transition of the front wheel braking force and the rear wheel braking force is:

a state transition 1 with which, within a range excluding a range in which the rear wheel braking force is small as compared to an ideal braking force distribution when one rider rides, a state where the front wheel braking force and the rear wheel braking force are both zero transitions to a state of changing along positions where the front wheel braking force and the rear wheel braking force are both not zero.

2. The leaning vehicle (1001) according to claim 1, wherein the AEB control device (1011) is configured to control the front wheel braking force and the rear wheel braking force that are automatically generated, so that a state transition of the front wheel braking force and the rear wheel braking force is:

a state transition 2 with which, within a range excluding a range in which the rear wheel braking force is small as compared to the ideal braking force distribution when one rider rides, a state where the front wheel braking force and the rear wheel braking force are both zero transitions to a state of departing from the ideal braking force distribution when one rider rides and a braking force distribution at which the front wheel braking force is zero.

3. The leaning vehicle (1001) according to claim 2, wherein the AEB control device (1011) is configured to control the front wheel braking force and the rear wheel braking force that are automatically generated, so that a state transition of the front wheel braking force and the rear wheel braking force is:

a state transition 3 with which, within a range excluding a range in which the rear wheel braking force is small as compared to the ideal braking force distribution when one rider rides, a state of departing from the ideal braking force distribution when one rider rides transitions to a state of approaching ideal braking force distribution when one rider rides so that the total braking force which is the sum total of the front wheel braking force and the rear wheel braking force increases.

4. The leaning vehicle (1001) according to any one of claims 1 to 3, wherein the AEB control device (1011) is configured to control the front wheel braking force and the rear wheel braking force that are automatically generated, so that a state transition of the front wheel braking force and the rear wheel braking force is:

a state transition 4 with which, within a range excluding a range in which the rear wheel braking force is small as compared to the ideal braking force distribution when one rider rides, transition to a state of changing along the ideal braking force distribution when one rider rides so that the total braking force which is the sum total of the front wheel braking force and the rear wheel braking force increases occurs.

5. The leaning vehicle (1001) according to claim 4, wherein the AEB control device (1011) is configured to control the front wheel braking force and the rear wheel braking force that are automatically generated, so that a state transition of the front wheel braking force and the rear wheel braking force is:

a state transition 5 with which, within a range excluding a range in which the rear wheel braking force is small as compared to the ideal braking force distribution when one rider rides, a state of changing along the ideal braking force distribution when one rider rides so that the total braking force increases transitions to a state of departing from the ideal braking force distribution when one rider rides.

6. The leaning vehicle (1001) according to any one of claims 1 to 5, wherein the AEB control device (1011) is configured to control the front wheel braking force and the rear wheel braking force that are automatically generated, so that a state transition of the front wheel braking force and the rear wheel braking force is:

a state transition 6 with which, within a range excluding a range in which the rear wheel braking force is small as compared to the ideal braking force distribution when one rider rides, a state where the total braking force which is the sum total of the front wheel braking force and the rear wheel braking force increases transitions to a state where the total braking force is maintained.

**Patentansprüche**

1. Ein Neigungsfahrzeug (1001), das folgende Merkmale aufweist: einen Vorderradbremsoperator und einen Hinterradbremsoperator, die durch einen Fahrer bedient werden; und eine AEB-(Autonome Notbremsung)-Steuervorrichtung (1011), die an einem Neigungsfahrzeugkarosserierahmen (1002) angebracht ist, der sich in einer Links-Rechts-Richtung des Fahrzeugs beim Rechtsabbiegen nach rechts neigt und in der Links-Rechts-Richtung des Fahrzeugs beim Linksabbiegen nach links neigt, und konfiguriert ist, automatisch eine Vorderradbremskraft und eine Hinterradbremskraft zu steuern, ohne eine Bedienung von zumindest einem des Vorderradbremsoperators oder des Hinterradoperators zu benötigen, basierend auf einer Spanne, die basierend auf der Beziehung zwischen einem Hindernis (2001) und dem Neigungsfahrzeug (1001) erfasst wird, **dadurch gekennzeichnet, dass** die AEB-Steuervorrichtung (1011) konfiguriert ist, die Vorderradbremskraft und die Hinterradbremskraft, die automatisch erzeugt werden, zu steuern, sodass ein Zustandsübergang der Vorderradbremskraft und der Hinterradbremskraft Folgender ist:

ein Zustandsübergang 1, mit dem innerhalb eines Bereichs, der einen Bereich ausschließt, in dem die Hinterradbremskraft klein ist im Vergleich zu einer idealen Bremskraftverteilung, wenn ein Fahrer fährt, ein Zustand, in dem die Vorderradbremskraft und die Hinterradbremskraft beide null sind, übergeht in einen Zustand einer Veränderung entlang von Positionen, bei denen die Vorderradbremskraft und die Hinterradbremskraft beide nicht null sind.

2. Das Neigungsfahrzeug (1001) gemäß Anspruch 1, bei dem die AEB-Steuervorrichtung (1011) konfiguriert ist, die Vorderradbremskraft und die Hinterradbremskraft, die automatisch erzeugt werden, zu steuern, sodass ein Zustandsübergang der Vorderradbremskraft und der Hinterradbremskraft Folgender ist:

ein Zustandsübergang 2, mit dem innerhalb eines Bereichs, der einen Bereich ausschließt, in dem die Hinterradbremskraft klein ist im Vergleich zu der idealen Bremskraftverteilung, wenn ein Fahrer fährt, ein Zustand, in dem die Vorderradbremskraft und die Hinterradbremskraft beide null sind, übergeht in einen Zustand einer Abweichung von der idealen Bremskraftverteilung, wenn ein Fahrer fährt, und einer Bremskraftverteilung, bei der die Vorderradbremskraft null ist.

3. Das Neigungsfahrzeug (1001) gemäß Anspruch 2, bei dem die AEB-Steuervorrichtung (1011) konfiguriert ist, die Vorderradbremskraft und die Hinterradbremskraft, die automatisch erzeugt werden, zu steuern, sodass ein Zustandsübergang der Vorderradbremskraft und der Hinterradbremskraft Folgender ist:

ein Zustandsübergang 3, mit dem innerhalb eines Bereichs, der einen Bereich ausschließt, in dem die Hinterradbremskraft kleiner ist im Vergleich zu der idealen Bremskraftverteilung, wenn ein Fahrer fährt, ein Zustand einer Abweichung von der idealen Bremskraftverteilung, wenn ein Fahrer fährt, übergeht in einen Zustand der Annäherung an eine ideale Bremskraftverteilung, wenn ein Fahrer fährt, sodass die gesamte Bremskraft, die Gesamtsumme der Vorderradbremskraft und der Hinterradbremskraft ist, zunimmt.

4. Das Neigungsfahrzeug (1001) gemäß einem der Ansprüche 1 bis 3, bei der die AEB-Steuervorrichtung (1011) konfiguriert ist, die Vorderradbremskraft und die Hinterradbremskraft, die automatisch erzeugt werden, zu steuern, sodass ein Zustandsübergang in der Vorderradbremskraft und der Hinterradbremskraft Folgender ist:

ein Zustandsübergang 4, mit dem innerhalb eines Bereichs, der einen Bereich ausschließt, in dem die Hinterradbremskraft klein ist im Vergleich zu der idealen Bremskraftverteilung, wenn ein Fahrer fährt, ein Übergang stattfindet in einen Zustand einer Veränderung entlang der idealen Bremskraftverteilung, wenn ein Fahrer fährt, sodass die gesamte Bremskraft, die die Gesamtsumme der Vorderradbremskraft und der Hinterradbremskraft ist, zunimmt.

5. Das Neigungsfahrzeug (1001) gemäß Anspruch 4, bei dem die AEB-Steuervorrichtung (1011) konfiguriert ist, die Vorderradbremskraft und die Hinterradbremskraft, die automatisch erzeugt werden, zu steuern, sodass ein Zustandsübergang der Vorderradbremskraft und der Hinterradbremskraft Folgender ist:

ein Zustandsübergang 5, mit dem innerhalb eines Bereichs, der einen Bereich ausschließt, in dem die Hinterradbremskraft klein ist im Vergleich zu der idealen Bremskraftverteilung, wenn ein Fahrer fährt, ein Zustand einer Veränderung entlang der idealen Bremskraftverteilung, wenn ein Fahrer fährt, sodass sich die gesamte Bremskraftübergänge erhöht, übergeht in einen Zustand einer Abweichung von der idealen Bremskraftverteilung, wenn ein Fahrer fährt.

6. Das Neigungsfahrzeug (1001) gemäß einem der Ansprüche 1 bis 5, bei dem die AEB-Steuervorrichtung (1011) konfiguriert ist, die Vorderradbremskraft und die Hinterradbremskraft, die automatisch erzeugt werden, zu steuern, sodass ein Zustandsübergang der Vorderradbremskraft und der Hinterradbremskraft Folgender ist:

ein Zustandsübergang 6, mit dem innerhalb eines Bereichs, der einen Bereich ausschließt, in dem die Hinterradbremskraft klein ist im Vergleich zu der idealen Bremskraftverteilung, wenn ein Fahrer fährt, ein Zustand, in dem die gesamte Bremskraft, die die Gesamtsumme der Vorderradbremskraft und der Hinterradbremskraft ist, sich erhöht, übergeht in einen Zustand, in dem die gesamte Bremskraft aufrechterhalten wird.

**Revendications**

1. Véhicule à inclinaison (1001) comprenant: un actionneur de frein de la roue avant et un actionneur de frein de la roue arrière qui sont actionnés par un conducteur; et un dispositif de commande AEB (Freinage de Secours Autonome) (1011) qui est monté sur un châssis de carrosserie de véhicule à inclinaison (1002) incliné vers la droite dans une direction gauche-droite du véhicule lors d'un virage à droite et incliné vers la gauche dans la direction gauche-droite du véhicule lors d'un virage à gauche et qui est configuré pour commander automatiquement une force de freinage de la roue avant et une force de freinage de la roue arrière sans nécessiter un actionnement d'au moins l'un parmi l'actionneur de frein de la roue avant ou l'actionneur de frein de la roue arrière, sur base d'une marge acquise sur base du rapport entre un obstacle (2001) et le véhicule à inclinaison (1001),

**caractérisé par le fait que**

le dispositif de commande AEB (1011) est configuré pour commander la force de freinage de la roue avant et la force de freinage de la roue arrière qui sont générées automatiquement, de sorte qu'une transition d'état de la force de freinage de la roue avant et de la force de freinage de la roue arrière soit:

une transition d'état 1 par laquelle, dans une plage excluant une plage dans laquelle la force de freinage de la roue arrière est faible en comparaison avec une répartition idéale de la force de freinage lorsqu'un conducteur conduit, un état dans lequel la force de freinage de la roue avant et la force de freinage de la roue arrière sont, toutes deux, zéro transite à un état de changement le long de positions dans lequel la force de freinage de la roue avant et la force de freinage de la roue arrière sont, toutes deux, différentes de zéro.

2. Véhicule à inclinaison (1001) selon la revendication 1, dans lequel le dispositif de commande AEB (1011) est configuré pour commander la force de freinage de la roue avant et la force de freinage de la roue arrière qui sont générées automatiquement, de sorte qu'une transition d'état de la force de freinage de la roue avant et de la force de freinage de la roue arrière soit:

une transition d'état 2 par laquelle, dans une plage excluant une plage dans laquelle la force de freinage de la roue arrière est faible en comparaison avec la répartition idéale de la force de freinage lorsqu'un conducteur conduit, un état dans lequel la force de freinage de la roue avant et la force de freinage de la roue arrière sont, toutes deux, zéro transite à un état d'éloignement de la répartition idéale de la force de freinage lorsqu'un conducteur conduit et une répartition de la force de freinage à laquelle la force de freinage de la roue avant est zéro.

3. Véhicule à inclinaison (1001) selon la revendication 2, dans lequel le dispositif de commande AEB (1011) est configuré pour commander la force de freinage de la roue avant et la force de freinage de la roue arrière qui sont automatiquement générées, de sorte qu'une transition d'état de la force de freinage de la roue avant et de la force de freinage de la roue arrière soit:

une transition d'état 3 par laquelle, dans une plage excluant une plage dans laquelle la force de freinage de la roue arrière est faible en comparaison avec la répartition idéale de la force de freinage lorsqu'un conducteur conduit, un état d'éloignement de la répartition idéale de la force de freinage lorsqu'un conducteur conduit transite à un état se rapprochant de la répartition idéale de la force de freinage lorsqu'un conducteur conduit, de sorte que la force de freinage totale, qui est la somme totale de la force de freinage de la roue avant et de la force de freinage de la roue arrière, augmente.

4. Véhicule à inclinaison (1001) selon l'une quelconque des revendications 1 à 3, dans lequel le dispositif de commande AEB (1011) est configuré pour commander la force de freinage de la roue avant et la force de freinage de la roue arrière qui sont automatiquement générées, de sorte qu'une transition d'état de la force de freinage de la roue avant et de la force de freinage de la roue arrière soit:

une transition d'état 4 par laquelle, dans une plage excluant une plage dans laquelle la force de freinage de la roue arrière est faible en comparaison avec la répartition idéale de la force de freinage lorsqu'un conducteur conduit, se produit la transition à un état de changement le long de la répartition idéale de la force de freinage lorsqu'un conducteur conduit, de sorte que la force de freinage totale, qui est la somme de la force de freinage de la roue avant et de la force de freinage de la roue arrière, augmente.

5. Véhicule à inclinaison (1001) selon la revendication 4, dans lequel le dispositif de commande AEB (1011) est configuré pour commander la force de freinage de la roue avant et la force de freinage de la roue arrière qui sont générées automatiquement, de sorte qu'une transition d'état de la force de freinage de la roue avant et de la force de freinage de la roue arrière soit:

une transition d'état 5 par laquelle, dans une plage excluant une plage dans laquelle la force de freinage de la roue arrière est faible en comparaison avec la répartition idéale de la force de freinage lorsqu'un conducteur conduit, un état de changement le long de la répartition idéale de la force de freinage lorsqu'un conducteur conduit, de sorte que la force de freinage totale augmente, transite à un état d'éloignement de la répartition idéale de la force de freinage lorsqu'un conducteur conduit.

6. Véhicule à inclinaison (1001) selon l'une quelconque des revendications 1 à 5, dans lequel le dispositif de commande AEB (1011) est configuré pour commander la force de freinage de la roue avant et la force de freinage de la roue arrière qui sont générées automatiquement, de sorte qu'une transition d'état de la force de freinage de la roue avant et de la force de freinage de la roue arrière soit:

une transition d'état 6 par laquelle, dans une plage excluant une plage dans laquelle la force de freinage de la roue arrière est faible en comparaison avec la répartition idéale de la force de freinage lorsqu'un conducteur conduit, un état dans lequel augmente la force de freinage totale, qui est la somme totale de la force de freinage de la roue avant et de la force de freinage de la roue arrière, transite à un état dans lequel la force de freinage totale est maintenue.

# FIG.1

| | FRONT BRAKE OPERATION AMOUNT | AUTOMATIC |
|---|---|---|
| | REAR BRAKE OPERATION AMOUNT | BRAKING FORCE |
| | FRONT BRAKE OPERATION AMOUNT $=0$ | YES |
| | REAR BRAKE OPERATION AMOUNT $=0$ | |
| | FRONT BRAKE OPERATION AMOUNT $=0$ | NO |
| | REAR BRAKE OPERATION AMOUNT $=0$ | |

State transition [1]

FIG.2

| | | |
|---|---|---|
| FRONT BRAKE OPERATION AMOUNT | AUTOMATIC | |
| REAR BRAKE OPERATION AMOUNT | BRAKING FORCE | |
| FRONT BRAKE OPERATION AMOUNT =0 | YES | |
| REAR BRAKE OPERATION AMOUNT =0 | | |
| FRONT BRAKE OPERATION AMOUNT =0 | NO | |
| REAR BRAKE OPERATION AMOUNT =0 | | |

State transition [2]

# FIG.3

| ![front brake icon] FRONT BRAKE OPERATION AMOUNT ![rear brake icon] REAR BRAKE OPERATION AMOUNT | AUTOMATIC BRAKING FORCE |
|---|---|
| ![front brake icon] FRONT BRAKE OPERATION AMOUNT =0 ![rear brake icon] REAR BRAKE OPERATION AMOUNT =0 | YES |
| ![front brake icon] FRONT BRAKE OPERATION AMOUNT =0 ![rear brake icon] REAR BRAKE OPERATION AMOUNT =0 | NO |

1001  1002  2001  1011  1001

F  L — R  Re

## State transition [3]

# FIG.4

| | FRONT BRAKE OPERATION AMOUNT<br>REAR BRAKE OPERATION AMOUNT | AUTOMATIC<br>BRAKING FORCE |
|---|---|---|
| | FRONT BRAKE OPERATION AMOUNT =0<br>REAR BRAKE OPERATION AMOUNT =0 | YES |
| | FRONT BRAKE OPERATION AMOUNT =0<br>REAR BRAKE OPERATION AMOUNT =0 | NO |

State transition [4]

FIG.5

| 1001 1002 2001 1011 1001 | FRONT BRAKE OPERATION AMOUNT REAR BRAKE OPERATION AMOUNT | AUTOMATIC BRAKING FORCE |
|---|---|---|
| | FRONT BRAKE OPERATION AMOUNT =0 REAR BRAKE OPERATION AMOUNT =0 | YES |
| | FRONT BRAKE OPERATION AMOUNT =0 REAR BRAKE OPERATION AMOUNT =0 | NO |

State transition [5]

# FIG.6

| | FRONT BRAKE OPERATION AMOUNT | AUTOMATIC |
| | REAR BRAKE OPERATION AMOUNT | BRAKING FORCE |
|---|---|---|
| | FRONT BRAKE OPERATION AMOUNT =0 | YES |
| | REAR BRAKE OPERATION AMOUNT =0 | |
| | FRONT BRAKE OPERATION AMOUNT =0 | NO |
| | REAR BRAKE OPERATION AMOUNT =0 | |

## State transition [6]

# FIG.7

| | | |
|---|---|---|
| FRONT BRAKE OPERATION AMOUNT | | AUTOMATIC |
| REAR BRAKE OPERATION AMOUNT | | BRAKING FORCE |
| FRONT BRAKE OPERATION AMOUNT = o | | YES |
| REAR BRAKE OPERATION AMOUNT = o | | |
| FRONT BRAKE OPERATION AMOUNT = o | | NO |
| REAR BRAKE OPERATION AMOUNT = o | | |

State transition [7]

FIG.8

1011

| BRAKE OPERATION STATE DETECTOR |
| YAW ANGLE RELATED PHYSICAL QUANTITY DETECTOR |
| LEANING ANGLE RELATED PHYSICAL QUANTITY DETECTOR |
| WHEEL SPEED SENSOR |
| FRONT SENSOR |

CONTROL DEVICE

ENGINE UNIT

BRAKE PRESSURE CONTROLLER

FRONT BRAKING DEVICE

REAR BRAKING DEVICE

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017024644 A
- US 2017028971 A1
- US 2017028972 A1